(19) **Europäisches Patentamt**
**European Patent Office**
**Office européen des brevets**

(11) **EP 3 989 164 B1**

(12) **EUROPEAN PATENT SPECIFICATION**

(45) Date of publication and mention
of the grant of the patent:
**06.05.2026 Bulletin 2026/19**

(21) Application number: **21204653.6**

(22) Date of filing: **26.10.2021**

(51) International Patent Classification (IPC):
**G06T 5/70** *(2024.01)* **G06T 7/00** *(2017.01)*
**G06T 7/11** *(2017.01)* **G06T 5/20** *(2006.01)*

(52) Cooperative Patent Classification (CPC):
**G06T 7/0004; G06T 5/20; G06T 5/70; G06T 7/11;**
G06T 2200/04; G06T 2207/10028;
G06T 2207/20021; G06T 2207/20104;
G06T 2207/30164

(54) **METHOD FOR IDENTIFYING A DISCONTINUITY ON THE SURFACE OF AN OBJECT**

VERFAHREN ZUR IDENTIFIZIERUNG EINER DISKONTINUITÄT AUF DER OBERFLÄCHE EINES OBJEKTS

MÉTHODE D'IDENTIFICATION D'UNE DISCONTINUITÉ SUR LA SURFACE D'UN OBJET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2020 IT 202000025237**

(43) Date of publication of application:
**27.04.2022 Bulletin 2022/17**

(73) Proprietor: **Purple S.r.l. a socio unico**
**20143 Milano (IT)**

(72) Inventor: **CASTANO, Marco**
**20143 MILANO (IT)**

(74) Representative: **Cevini, Gaia et al**
**Marchi & Partners S.r.l.**
**Via Vittor Pisani, 13**
**20124 Milano (IT)**

(56) References cited:
**CN-B- 111 192 225**

• **LEI YANG: "A novel system for off-line 3D seam extraction and path planning based on point cloud segmentation for arc welding robot", ROBOTICS AND COMPUTER INTEGRATED MANUFACTURING., vol. 64, 1 August 2020 (2020-08-01), GB, pages 101929, XP093165408, ISSN: 0736-5845, Retrieved from the Internet <URL:https://www.sciencedirect.com/science/ article/pii/S0736584519305782/pdfft? md5=1212c34c3195236d6472b6158cf5a3f8& pid=1-s2.0-S0736584519305782-main.pdf> DOI: 10.1016/j.rcim.2019.101929**
• **WANG XIANGFEI ET AL: "Point cloud 3D parent surface reconstruction and weld seam feature extraction for robotic grinding path planning", THE INTERNATIONAL JOURNAL OF ADVANCED MANUFACTURING TECHNOLOGY, SPRINGER, LONDON, vol. 107, no. 1-2, 20 February 2020 (2020-02-20), pages 827 - 841, XP037050208, ISSN: 0268-3768, [retrieved on 20200220], DOI: 10.1007/S00170-020-04947-1**
• **RODRIGUEZ-MARTIN MANUEL ET AL: "Feasibility Study of a Structured Light System Applied to Welding Inspection Based on Articulated Coordinate Measure Machine Data", IEEE SENSORS JOURNAL, IEEE SERVICE CENTER, NEW YORK, NY, US, vol. 17, no. 13, 1 July 2017 (2017-07-01), pages 4217 - 4224, XP011652507, ISSN: 1530-437X, [retrieved on 20170610], DOI: 10.1109/JSEN.2017.2700954**

EP 3 989 164 B1

- **IOANNOU Y ET AL: "Difference of Normals as a Multi-scale Operator in Unorganized Point Clouds", 3D IMAGING, MODELING, PROCESSING, VISUALIZATION AND TRANSMISSION (3DIMPVT), 2012 SECOND INTERNATIONAL CONFERENCE ON, IEEE, 13 October 2012 (2012-10-13), pages 501 - 508, XP032323204, ISBN: 978-1-4673-4470-8, DOI: 10.1109/3DIMPVT.2012.12**

**Description**

TECHNICAL FIELD

The present invention relates in general to the field of automated systems for controlling the surfaces of objects in an industrial environment. In particular the present invention relates to a method for identifying and locating a discontinuity (e.g., a weld, a joint, etc.). on the surface of an object, for example a pipe.

PRIOR ART

In the industrial field, it is known to use methods and systems for inspecting the surface of an object, such as a pipe, in order to check for the intact condition of the part and if necessary guide an anthropomorphic robot towards a possible discontinuity on this surface in order to carry out work in that area (for example, a repair).

Possible discontinuities on the surface of a pipe are associated with, for example, welds or joints or junctions or with defects, irregularities or anomalies present on the surface of the said pipe.

Hitherto, to inspect the surface of an object in an industrial environment, in particular a pipe, manual methods carried out by human operators (for example, visual inspections) or automated systems are used. The automated systems involve the use of robots and laser triangulation vision systems and/or 2D vision systems. These systems are able to identify a discontinuity on the surface of a pipe by means of analysis of the diameter of the said pipe (for example, calculating the difference in diameter of the pipe at the point of discontinuity) and/or indirectly by means of calculation of a fixed distance with respect to reference objects which are easier to recognize.

Wang Xiangfei et al., "Point cloud 3D parent surface reconstruction and weld seam feature extraction for robotic grinding path planning", The International Journal of Advanced Manufacturing Technology, Springer, London, vol. 107, No. 1-2, 20 February 2020, pages 827-841, describes a method for planning the path of a robot to automatically remove welds from a surface.

CN 111 192 225 B describes a method for determining whether defects are present or not on piping.

SUMMARY OF THE INVENTION

The inventor has noted that the vision systems currently used to check for discontinuities on pipes have a number of drawbacks. In particular, the inventor has noted that when the difference in diameter between the two pipe portions joined together at, for example, a joint is not significant and/or when the position of the discontinuity, with respect to known reference objects, is not repetitive, it becomes difficult to be able to precisely determine the position of these discontinuities. Consequently, it also becomes difficult to be able to determine the trajectory which the anthropomorphic robot must follow to safely reach the area of the discontinuity which is being monitored and analyzed.

The Applicant has therefore defined the object of providing a method and a system which is able to identify (i.e., recognize and locate) a discontinuity on the surface of an object, in particular a pipe, in a more precise and reliable manner compared to the known methods.

The aforementioned object, in addition to other objects, is achieved by a method and a system for identifying a discontinuity on the surface of an object, in particular a pipe, which involves the use of a 3D vision system able to reconstruct the scene located opposite the system itself in the form of a point cloud, and an algorithm able to analyze the aforementioned point cloud in order to recognize and determine the position of a possible discontinuity.

In the following present description and in the claims, the term "discontinuity" will be used to indicate an area or zone of a surface of an object comprising a variation in the thickness of this surface at a position where, for example, a weld is located. In case the object is a pipe or two interconnected pipes, a discontinuity may occur at the location of a junction or joint between pipes or pipe portions, or of a weld, where there is a difference in diameter between the pipes or the pipe portions.

According to a first aspect, the present invention provides a method for identifying a discontinuity on a surface of an object placed within a work environment as defined in independent claim 1.

Preferably, the method comprises filtering the points of the 3D point cloud on the basis of the Euclidean distance between them, said filtering comprising calculating, for each point, an average distance with respect to a number, N, of adjacent points and removing from said 3D point cloud the points which have an average distance from their N adjacent points greater than the value of a filtering threshold.

Preferably, the filtering operation further comprises calculating a standard deviation of the average distances calculated for each point of the 3D point cloud and defining, for each point of the 3D point cloud, the value of the filtering threshold, f_th, in the following manner:

$$f\_th = m + stdv * sX,$$

where m is the average distance, stdv is the standard deviation and sX is a predefined factor (for example equal to 2.5).

Preferably, the method comprises locating one or more known reference objects or edges in the 3D point cloud and repositioning the search volume based on the localization of one or more known reference objects or edges.

Preferably, the step of determining the normals to the surfaces defined by the points comprises performing a mathematical triangulation of the points included in the search volume to determine a set of triangles such that the union of the surfaces of the triangles represents the surface of the objects included in the search volume.

Preferably, the step of analyzing the orientation of the normals comprises checking that the normals have an orientation consistent with each other by calculating the component of the versor of each normal in the direction identified by a reference versor, and checking that the components have the same sign.

In particular, the step of determining the normals comprises calculating the normals with respect to the surfaces of the triangles and the step of analyzing the normals comprises calculating an orientation of a versor of the normal of each triangle with respect to a reference versor as the component of the versor of the normal in the direction identified by the reference versor.

According to an embodiment of the invention, calculating an orientation of a versor of the normal of each triangle comprises calculating the cosine of the angle, T, between the versor of the normal and the reference versor.

Furthermore, preferably, the step of analyzing the orientation of the normals comprises checking that all the normals have the abovementioned component with the same sign and, in case one of the normals has this component with an opposite sign, inverting the sign of the component which has an opposite sign.

In particular, according to some embodiments, the step of analyzing the orientation of said normals comprises selecting groups of homogeneous points comprising a number of points comprised between a predefined minimum number and a predefined maximum number.

Preferably, the step of analyzing the orientation of the normals comprises building a depth map starting from the selected groups of homogeneous points and identifying the discontinuity on the depth map at a hole on the map.

Preferably, the discontinuity is a weld or a joint or a junction.

According to a second aspect, the present invention provides a system for identifying a discontinuity on a surface of an object placed within a work environment as defined in independent claim 11.

Preferably, the acquisition unit comprises a digitizing sensor which implements an artificial vision system.

Preferably, the system further comprises an actuation unit for sending commands to a robot to carry out a work on the object at the identified discontinuity.

BRIEF DESCRIPTION OF THE FIGURES

The present invention will become clearer from the following detailed description, provided by way of a non-limiting example, to be read with reference to the accompanying drawings, in which:

- Figure 1 schematically shows a system for identifying a discontinuity on the surface of an object according to an embodiment of the present invention;
- Figure 2 shows a flowchart illustrating the steps of the method according to the present invention; and
- Figure 3 is a flowchart which shows in greater detail the step of identifying the discontinuity shown in the flowchart of Figure 2.

DETAILED DESCRIPTION

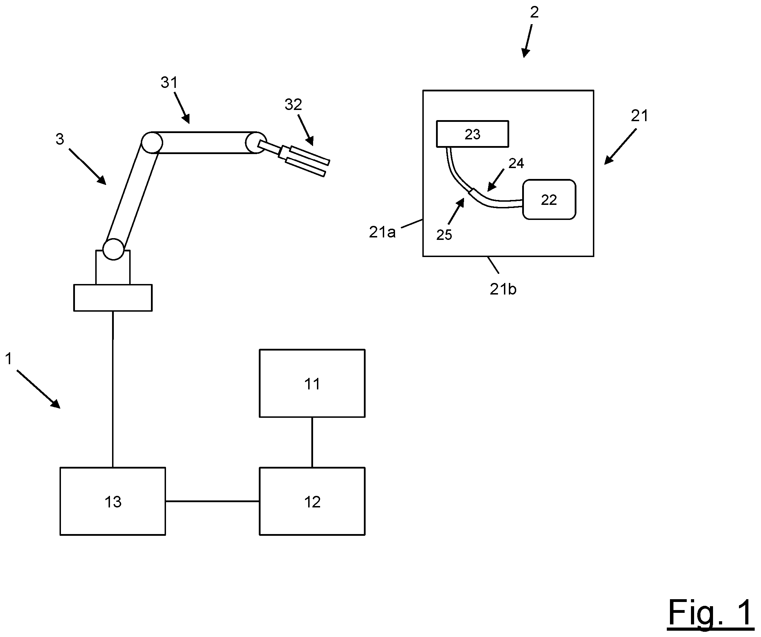

Figure 1 schematically shows a system 1 for identifying a discontinuity on the surface of an object positioned within a work environment 2. In particular, in the non-limiting exemplary scemario schematically shown in Figure 1, the object is a pipe.

By way of example, the work environment 2 schematically shown in Figure 1 is an electric household appliance, such as a refrigerator. The electric household appliance comprises a frame 21 with a vertical edge 21a and a horizontal edge 12b, inside which a first component 22 and a second component 23 connected by means of a pipe 24 are positioned. The pipe 24 comprises a discontinuity 25 (for example at a joint for joining together two different pipe portions, or a weld, etc.).

The system 1 according to the present invention comprises an acquisition unit 11 and a processing unit 12 for identifying the discontinuity 25, as will be described in detail below. In particular, the acquisition unit 11 comprises a processor, a memory and a software module for performing the digitization of the work environment 2. Said unit, together with one or more digitization sensors (not shown in Figure 1) preferably implements an artificial vision system. For example, the digitization sensor may comprise a digital camera and a laser source. According to this exemplary embodiment, the laser source illuminates the work environment and the camera captures the light beam reflected by the objects present in the work environment, in particular the object considered for the inspection, which in the scenario of Figure 1 is the pipe 24. According to other embodiments, the digitization sensor may comprise a stereoscope system which uses two cameras and an LED projector which projects patterns onto the surface to be acquired.

Advantageously such a stereoscope system is able to cover possible shadow zones, i.e., zones where the beam of the laser source falls but the camera is unable to capture the their profile. Furthermore the use of a stereoscope system proves to be advantageous also owing to its capacity to discriminate reconstruction errors due to partial reflections of the light source on the surface of the object focussed on.

The acquisition unit 11 is preferably connected to the processing unit 12 which comprises a processor, a memory, software processing modules and an input/output interface by means of which a user is able to start and control the process of identifying the discontinuity 25, as it will be described below. The processing unit 12 may be implemented in a PC, a micro-computer, etc.

Furthermore, according to the embodiment shown in Figure 1, the system 1 comprises an actuation unit 13 for sending commands to a gripping robot 3 for performing an operation on the considered object at the location of the identified discontinuity. The robot 3 schematically shown by way of example in Figure 1 comprises a poly-articulated robotic arm 31 provided, at its end, with a tool 32 for carrying out the operation on the considered object. The digitization sensor of the acquisition unit 11 may be installed on the robotic arm 31.

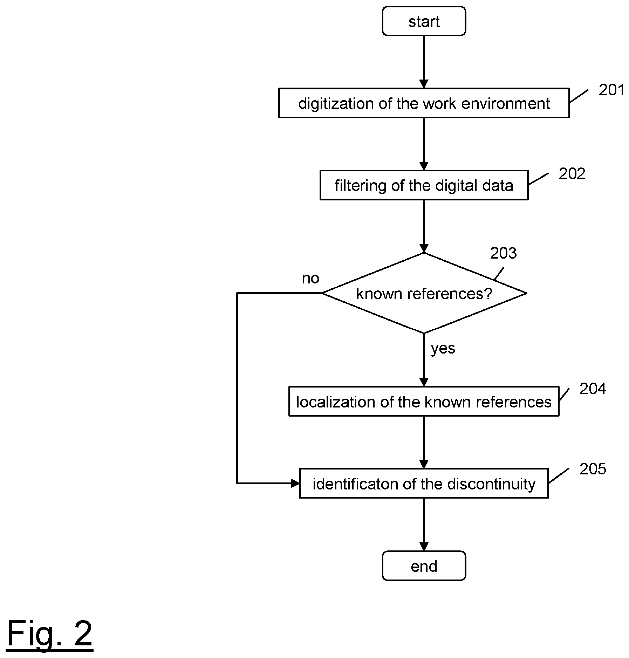

Figure 2 shows a flowchart illustrating the steps of the method for identifying the discontinuity 25 according to the present invention.

At the start of the process, at step 201, the acquisition unit 11 preferably performs a 3D digitization of the work environment 2. In the following present description, it will be assumed, for the sake of simplicity, that the 3D digitization is performed with reference to the entire work environment 2, namely, according to the example considered above, the entire electric household appliance.

The 3D digitization of the work environment is performed using known artificial vision techniques; for this reason, this step will not be described in detail herein below.

During this step, the acquisition unit 11 preferably cooperates with the digitization sensor to acquire a 3D point cloud. The 3D point cloud may have as reference system a reference system defined during calibration of the sensor, or a reference system defined on the basis of a frame which is common to the artificial vision system and robot. Preferably, in order to guide the robot, the reference system of the 3D point cloud is a reference system common to the artificial vision system and robot. The 3D digitization thus performed is a discrete geometric representation of the surfaces of the objects included in the work environment 2, in particular of the considered pipe 24. At the end of the digitization process, the 3D point cloud is preferably sent from the acquisition unit 11 to the processing unit 12.

Preferably step 201 also comprises acquiring the light intensity information for each point of the point cloud, i.e. acquiring, for each point, the corresponding light intensity detected by each sensor used for the 3D digitization. The light intensity information is also preferably sent from the acquisition unit 11 to the processing unit 12.

During a calculation configuration step, not shown in the flow flowchart of Figure 2, one or more discontinuity search volumes are defined within the electric household appliance 2; these volumes preferably have dimensions predefined by the user (for example, 80 x 80 x 80 mm$^3$) and their position may be set by the user in relation to, for example, the reference system described above. These search volumes represent the volumes within which the user assumes that the discontinuity may be found and within which the search for this discontinuity will be carried out, as it will be described in detail below.

This approach proves to be advantageous since it allows the position of several discontinuities within the same point cloud to be determined, allowing moreover the unique identification thereof.

Furthermore advantageously, as it will be described below, the aforementioned search volumes may be repositioned dynamically depending on the position of the electric household appliance, in order to eliminate potential errors due to displacement thereof with respect to the considered reference system. During the following step 202, the processing unit 12 preferably performs filtering of the digital data, namely filtering of the points in the 3D point cloud. According to embodiments of the present invention, filtering may be carried out on all the points of the 3D point cloud or only on the points of the considered search volumes. In any case, filtering is performed in order to remove the data background noise, namely in order to remove from the 3D point cloud any reconstruction errors and/or points not belonging to the work environment. The filtering operation is performed on the basis of the Euclidean distance of the points. In particular, the filtering operation may comprise the following operations:

(i). for each point of the 3D point cloud, calculating the Euclidean distance with respect to each point of a set of N adjacent points (where N is an integer number greater than 1, for example 10); the expression "N adjacent points" referring to each point of the 3D point cloud indicates the N points closest to said point (namely, the N points which are located at a smaller distance from considered the point compared to all the points of the 3D point cloud);

(ii). for each point of the 3D point cloud, calculating the average distance of this point with respect to the points of the set of N adjacent points;

(iii). calculating the standard deviation of the averages calculated during the preceding step;

(iv). defining, for each point of the 3D point cloud, a filtering threshold value f_th obtained by:

$$f\_th = m + stdv * sX,$$

namely the sum of the average m calculated with the aforementioned operation (ii) and the standard deviation stdv multiplied by a predefined factor sX (which, for example, may be equal to 2.5);

(v). eliminating the points which have an average distance from their adjacent N points greater than the filtering threshold value f_th defined with the aforementioned operation (iv).

The advantage of using the standard deviation multiplied by the predefined factor sX allows choosing which percentage of points considered to be "noise" may be removed from the point cloud. If, indeed, only the average m was to be considered, the method would involve the removal of all the points above a given threshold without taking into account the statistical standard deviation value. By means of the above operation (iv), instead, it is possible to choose a priori whether to implement a more substantial filtering (in case the point cloud is noisy) or a less impacting filtering, avoiding the elimination of groups of points which, even if they are very distant from others, do not constitute noise.

The subsequent steps of the method according to the present invention allow to identify the discontinuity 25 on the pipe 24 (it should be noted that reference will always be made, for simpler description, to the application example regarding the discontinuity 25 on the pipe 24 of the electric household appliance described above).

During the following step 203, the method involves determining whether to locate one or more known reference objects or edges in the 3D point cloud relating to the electric household appliance 2, in order to finely reposition the above mentioned search volumes on the basis of the actual position of the work environment 2 with respect to the position of the digitization unit 11. This step may be implemented in such a way that the user interacts with the processing unit 12 in order to set whether or not to determine the localization of one of more known reference objects or edges in the 3D point cloud.

A known reference object may be, for example, a known component of the electric household appliance 2, such as the compressor of the refrigerator. In addition to or as an alternative to the localization of a known reference object, the method provides for determining two edges which are perpendicular to each other in the 3D point cloud which represent two edges of the considered work environment, for example a horizontal edge and vertical edge of the electric household appliance 2. These edges define a reference system having an origin and two axes, one horizontal axis and one vertical axis, according to which the search volumes may be repositioned.

If, for example, at step 203 the user decides to determine the position of known edges in the 3D point cloud, the processing unit 12 preferably implements a 2D approach whereby, for example, the edges of the electric household appliance 2 are determined, the intersection thereof determining the origin of the reference system, and wherein the horizonal and vertical axes are oriented starting from the origin thus defined and along the edges of the electric household appliance 2. In particular, each of the two horizontal and vertical axes is determined as follows. In the previously calculated 3D point cloud, each of the two edges mentioned above is represented by a set of points which are not necessarily aligned along a straight line. The method therefore preferably provides for, in order to determine each of the two horizontal and vertical axes, determining the so-called "best-fit" straight line, namely determining the straight line which passes in the neighbourhood of the points representing the corresponding edge and which minimizes the sum of the squares of the distances between said points and the straight line itself.

At next step 204, the processing unit 12 preferably repositions the search volumes on the basis of the position of the one or more reference objects and/or in the reference system identified by the edges of the work environment as mentioned above. For this purpose, the method involves performing a roto-translation of the search volumes on the basis of the position of the known reference object or the origin of the reference system determined in the preceding step.

The localization of a known reference object in the 3D point cloud may be performed using a known CAD reference model of the said known reference object. In this case, the CAD model may be used by a 3D pattern matching algorithm present in the processing unit 12 to determine a correspondence between the CAD model of the known reference object and a portion of the 3D point cloud, so as to determine the 3D position of the known reference object within the 3D point cloud.

Alternatively, the localization of a known reference object in the 3D point cloud may be performed using a so-called "learned pattern". This learned pattern comprises a previously acquired 3D point reference cloud comprising the known reference object.

If, instead, at step 203, it is decided not to localize the one or more known reference objects and/or not to identify the edges within the work environment, the method continues without repositioning the search volumes.

According to embodiments of the present invention, the data filtering step 202 may be performed after steps 203 and 204 described above.

At next 205, the processing unit 12 preferably processes the 3D point cloud to identify the discontinuity. In particular, the step 205 preferably comprises firstly extracting from the 3D point cloud the points belonging to each considered search volume, which may be repositioned as described above in connection with step 204 of the method.

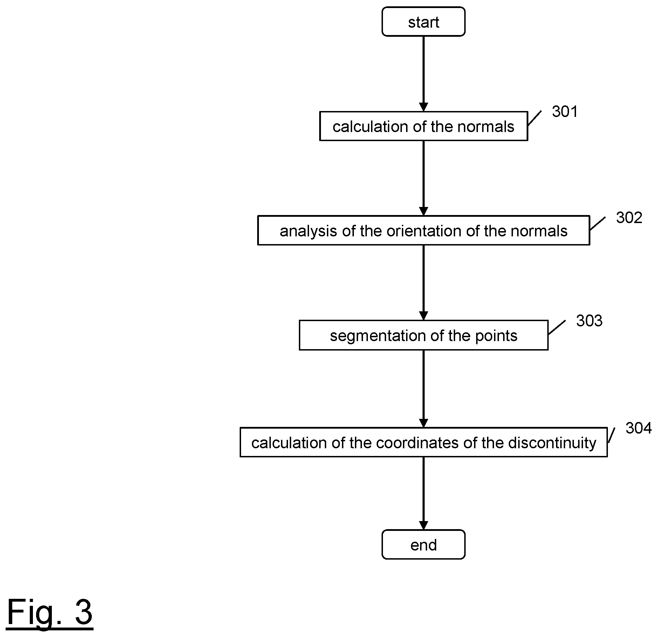

The next operations of step 205 are shown in the flowchart of Figure 3. For each considered search volume, step 205 comprises preferably performing the following operations:

- calculating the set of normals to the surfaces included in the search volume (step 301 of the flowchart of Figure 3);
- analyzing the orientation of the normals (step 302);
- segmenting the points (step 303);
- calculating the coordinates of the discontinuity (step 304).

The operation of calculating the normals of step 301 preferably comprises performing a mathematical triangulation of the points included in the considered search volume to determine a set (or "mesh") of triangles such that the union of the surfaces of said triangles represents the surface of the objects included in the search volume. In particular, the operation of triangulation of the points of the search volume allows to determine the set of triangles which represents the outer surface of the pipe 24 comprising the discontinuity. The triangulation may, for example, be performed using a "greedy" type algorithm. Such a type of algorithm is known and will not be described in detail below.

Then the processing unit 12 preferably calculates the normals with respect to the surfaces of the triangles determined by means of the aforementioned triangulation. The calculation of the normals comprises calculating, for each triangle resulting from the aforementioned triangulation, the normal versor. The calculation of the normals may comprise applying the known Moving Least Squares (MLS) algorithm.

At step 302, the analysis of the orientation of the normals which were calculated at step 301 preferably comprises checking the orientation of the said normals so that they have an orientation consistent with each other, for example towards the outside of the object on the surface of which they are calculated. In particular, for each normal, the method involves calculating an orientation of the versor of the normal of each triangle of the considered surface with respect to a reference versor, for example the versor of an Z axis in the current reference system XYZ (which may be the reference system calculated in step 203 described above or the starting reference system, namely, for example the reference system common to the artificial vision system and robot), namely calculating the component of the versor of the considered normal along the direction identified by the reference versor. The method, finally, involves checking that all the normals have this component with the same sign (for example, positive sign if the reference versor is the versor of the Z axis and the Z axis is oriented towards the outside of the object). In case a normal has this component with an opposite sign, the method provides for inverting the reference component so that it has a sign consistent with the other normals.

In particular, for example, this step may comprise calculating the cosine of the angle T between the versor of the i-th normal and the reference versor, wherein the cosine of the angle T is obtained by means of the following formula:

$$\cos(T)= (NormalX[i]*xRef + NormalY[i]*yRef + NormalZ[i]*zRef)/(NormalX[i]*NormalX[i] + NormalY[i]*NormalY[i]+NormalZ[i]*NormalZ[i]),$$

where NormalX[i] is the component of the versor of the i-th normal along the X axis, NormalY[i] is the component of the versor of the i-th normal along the Y axis, and NormalZ[i] is the component of the versor of the i-th normal along the Z axis, while xRef is the component of the reference versor along the X axis, yRef is the component of the reference versor along the Y axis, and zRef is the component of the reference versor along the Z axis. If the value of cos(T) is less than zero, the sign of the components NormalX[i], NormalY[i] and NormalZ[i] is inverted.

The calculation envisaged by the present invention and described hereinabove advantageously allows the detection also of discontinuities which are not very evident or which, in any case, appear gradually. Indeed, by using a reference versor, it is possible to determine also variations which occur "slowly" in a very reliable manner.

According to some embodiments of the method according to the present invention, at this point, the processing may comprise a first operation of roto-translation of the points of the considered search volume, by positioning the origin at the barycenter of the points belonging to the volume itself.

The next processing steps enable the identification of the discontinuity which may be present in the considered search volume, by determining if and where there is an anomalous variation in the orientation of the normals. In particular, the processing which will be described below comprises identifying the discontinuity if there is an anomalous variation in the orientation of the normals, i.e., identifying at least two groups of points which are homogeneous from the point of view of the orientation of the normals associated with them, and determining the presence of the anomalous variation in the orientation of the normals at intermediate points between the at least two groups of homogeneous points.

Then, step 303 preferably comprises segmenting the 3D points of the considered search volume by performing the following operations:

(i). for the points included in the considered search volume, calculating the angles between the normals and determining that two normals are "similar" if the angle between them is less than a predefined threshold (for example, 0.035 rad). Basically, by means of this operation it is possible to determine groups of points associated with an orientation of the normals variable to a limited degree, namely where the angle between the normals may vary only below the predefined threshold indicated above.

(ii). subdividing the set of points belonging to the considered search volume into groups of homogeneous points, namely into groups of points associated with normals similar to each other as specified with the operation (i) described here above. This operation allows the selection of only groups of homogeneous points which have a certain numerosity and are therefore associated with substantially smooth surfaces. In this way it is possible to discard intermediate points between the selected groups, which have a rapid variation of the angles between the normals and which therefore indicate an anomalous variation in the orientation of the normals, which in turn indicates instead a discontinuity. In such case, indeed, these are groups of points in small numbers;

(iii). selecting, for subsequent processing, the groups of homogeneous points which comprise a number of points comprised within a predefined range between a minimum number of points (for example, 50) and a maximum number of points;

(iv). considering the groups of homogeneous points selected with the preceding operation (iii), selecting the groups of homogeneous points where the points are connected by triangles; and

(v). considering the groups of homogeneous points selected with the preceding operation (iv), selecting, for subsequent processing, the groups of homogeneous points which comprise a number of points comprised within a further predefined range between a further minimum number of points (less than the minimum number of points in the operation (iii), for example 40) and a further maximum number of points.

The operations (i)-(v) described here above are preferably repeated by modifying, in particular, decreasing, the predefined threshold of the value of the angle between the normals, until the points of the considered search volume are subdivided into at least one integer number M>1 of groups of homogeneous points, for example M=2. These operations allow the elimination, from the set of points of the considered search volume, of the points which identify an anomalous variation in the orientation of the normals in the neighbourhood of the discontinuity, as it will become clear from the description below.

For example, in case of the pipe 24 considered in Figure 1, the segmentation of the points described above may result in the identification of two groups of homogeneous points above and below the discontinuity, namely above and below of the possible weld present in the pipe 24.

At this point, the processing unit 12 preferably creates a depth map starting from the points of the homogeneous groups which result at the end of the iterative process described above. The depth map constructed starting from the remaining homogeneous groups of points will have an interruption (or "hole") at the location of the discontinuity. In this way, therefore, the discontinuity is identified at the hole on the depth map, which corresponds to the position of intermediate points between the points of the groups of homogeneous points used to construct the map.

Then, at step 304, the processing unit 12 preferably calculates the coordinates X and Y of the discontinuity in the current reference system. For this purpose, the processing unit 12 performs a first mono-dimensional analysis of the depth map and reads the lines of the depth map until it detects the interruption in the Y coordinate; then, it performs a second mono-dimensional analysis of the depth map and reads the columns of the depth map until it detects the interruption in the X coordinate. The coordinates X, Y, where the interruption in the depth map is detected, are then preferably associated with the position of the discontinuity.

Preferably, the operations described above relating to the calculation of the normals, the analysis of their orientation and the identification of a possible discontinuity are repeated for each considered search volume.

At the end of the inspection described above, the information indicating the presence of a discontinuity and its localization in the considered search volumes are stored in the memory of the processing unit 12.

Optionally, for each discontinuity identified by means of the operations described above, the method according to the present invention further comprises:

- calculating the differences in diameter of the pipe 24 in the neighbourhood of the discontinuity; and
- calculating the differences in luminosity of the points of the point cloud in the neoighbourhood of the discontinuity.

Therefore, optionally, the method involves carrying out the following checks:

- determining whether the differences in diameter of the pipe 24 in the neighbourhood of the discontinuity exceed a corresponding predefined threshold; and
- determining whether the differences in luminosity of the points of the point cloud in the neighbourhood of the discontinuity exceed a corresponding predefined threshold.

In case at least one of the checks above has a negative outcome, the method involves determining whether the identified discontinuity is in reality a false positive. In particular, the check as to the difference in luminosity of the points proves to be useful where there are welds which typically have indeed different reflections on the surface compared to the surface of the pipe.

According to embodiments of the method of the present invention, the processing unit 12 preferably determines a selection rectangle (or "bounding box") for the 3D points at the location of the discontinuity, namely a parallelepiped within which the 3D points in the area of the discontinuity are contained. Then, preferably, the processing unit 12 extracts the rotations of said selection rectangle. Finally, the processing unit 12 preferably performs a roto-translation of the coordinates of the discontinuity so as to reposition them in the initial reference system, i.e., for example the reference system common to the artificial vision system and robot so as to be able to calculate the trajectory which the robotic arm 31 must follow in order to be positioned with its tool 32 in the correct position with respect to the identified discontinuity.

The calculation of the trajectory of the robotic arm 31 uses known algorithms and is not the subject of the present invention; it will therefore be described only briefly in the remainder of the present description.

The calculation of the trajectory of the robotic arm 31 by the processing unit 12 comprises the following operations:

- determining the working position of the tool 32 with respect to the identified discontinuity; this working position comprises a number of positions, each expressed in degrees, for the joints of the robotic arm 31;
- checking for any collision of the tool 32 within the work environment; for this check it is possible to implement the algorithm described in EP 1,976,671. If the outcome of this test is positive, namely if the processing unit determines a possible collision, then the processing unit 12 proceeds to determine a new working position of the tool 32, until a working position which does not result in collisions is determined;
- calculating the trajectory of the robotic arm 32 to reach, with the tool 32, the location of the identified discontinuity.

Once the trajectory of the robotic arm 31 has been calculated, the processing unit 12 sends the coordinates of this trajectory to the actuation unit 13, which determines and sends to the robot 3 the commands necessary for the movement of the robotic arm 31 towards the identified discontinuity.

Advantageously, the method described allows identification of the discontinuities on the surface of objects being inspected in a more precise and reliable manner than the known techniques.

Differently from the known techniques, indeed, the method involves the reconstruction of the scene being inspected in the form of a 3D point cloud and analysis of the orientation of the normals to the surfaces resulting from the triangulation of the points of the 3D point cloud. This technique in particular results in a reliable and precise identification of the discontinuities since it is able to overcome some of the limitations of the prior art. For example, the method according to the present invention is not based on the calculation of a distance with respect to more easily recognizable objects, which might not be repetitive, nor is it based on the recognition of the differences in diameter of the pipes, which might not be significant.

**Claims**

1. A computer-implemented method for identifying a discontinuity on a surface of an object placed within a work environment, said method including:

   a) digitizing said work environment to obtain a 3D point cloud;
   b) determining, within said work environment, a search volume including said discontinuity and extracting from said point cloud the points belonging to said search volume;
   c) considering the points of said point cloud within said search volume, determining the normals to the surfaces defined by said points;
   d) determining, for each of these normals, its orientation; and
   e) analyzing the orientation of said normals in said search volume to identify said discontinuity in the presence of an anomalous variation in the orientation of the normals,

   said step of analyzing the orientation of said normals comprises, for the points of said point cloud inside said search volume, calculating the angles between the normals and determining that two normals are similar if the angle between them is less than a predefined threshold, identifying at least two groups of homogeneous points associated with normals similar to each other and determining the presence of said anomalous variation at intermediate points between said at least two groups of homogeneous points.

2. The method according to claim 1, said method comprising filtering the points of said 3D point cloud on the basis of the Euclidean distance between them, said filtering comprising calculating, for each point, an average distance with respect to a number, N, of adjacent points and removing from said 3D point cloud the points that have an average distance from their N adjacent points greater than the value of a filtering threshold.

3. The method according to claim 2, wherein said filtering further comprises calculating a standard deviation of the average distances calculated for each point of said 3D point cloud and defining, for each point of said 3D point cloud, the value of said filtering threshold, f_th, in the following manner:

$$f\_th = m + stdv * sX,$$

where m is said average distance, stdv is said standard deviation and sX is a predefined factor.

4. The method according to any one of the preceding claims, said method comprising localizing one or more known reference objects or edges in the 3D point cloud and repositioning said search volume based on said localization of one or more known reference objects or edges.

5. The method according to any one of the preceding claims, wherein said step of determining the normals to the surfaces defined by the points comprises performing a mathematical triangulation of the points included in said search volume to determine a set of triangles such that the union of the surfaces of said triangles represents the surface of the objects included in said search volume.

6. The method according to claim 5, wherein said step of determining the normals comprises calculating said normals with respect to the surfaces of said triangles and said step of analyzing the orientation of said normals comprises calculating an orientation of a versor of the normal of each triangle with respect to a reference versor as the component of the versor of the normal in a direction defined by the reference versor.

7. The method according to claim 6, wherein said calculating an orientation of a versor of the normal of each triangle comprises calculating the cosine of the angle, T, between said versor of the normal and said reference versor.

8. The method according to claim 6 or 7, wherein said step of analyzing the orientation of said normals comprises checking that all the normals have said component with the same sign and, if one of said normals has said component with an opposite sign, inverting the sign of said component with an opposite sign.

9. The method according to any one of the preceding claims, wherein said step of analyzing the orientation of said normals comprises selecting groups of homogeneous points comprising a number of points between a predefined minimum number and a predefined maximum number.

10. The method according to claim 9, wherein said step of analyzing the orientation of said normals comprises building a depth map starting from the selected groups of homogeneous points and identifying said discontinuity on said depth map at a hole on said map.

11. A system for identifying a discontinuity on a surface of an object placed within a work environment, said system including:

- an acquisition unit (11) configured to digitize said work environment to obtain a 3D point cloud; and
- a processing unit (12) configured to:

- extract from said point cloud the points belonging to a search volume comprising said discontinuity;
- considering the points of said point cloud within said search volume, determine the normals to the surfaces defined by said points;
- determine, for each of said normals, its orientation; and

- analyze the orientation of said normals in said search volume to identify said discontinuity in the presence of an anomalous variation in the orientation of the normals,

wherein the processing unit (12) is further configured to, for the points of said point cloud inside said search volume, calculate the angles between the normals and determining that two normals are similar if the angle between them is less than a predefined threshold, identify at least two groups of homogeneous points associated with normals similar to each other and determine the presence of said anomalous variation at intermediate points between said at least two groups of homogeneous points.

12. The system according to claim 11, wherein said acquisition unit (11) comprises a digitizing sensor which implements an artificial vision system and comprises a stereoscope system which uses two cameras and an LED projector.

13. The system according to claim 11 or 12, said system further comprising an actuation unit (13) for sending commands to a robot (3) to carry out a work on said object at the identified discontinuity.

**Patentansprüche**

1. Computerimplementiertes Verfahren zum Identifizieren einer Fehlstelle auf einer Oberfläche eines innerhalb einer Arbeitsumgebung platzierten Objekts, das Verfahren beinhaltend:

   a) Digitalisieren der Arbeitsumgebung, um eine 3D-Punktwolke zu erhalten;
   b) Bestimmen, innerhalb der Arbeitsumgebung, eines Suchvolumens, das die Fehlstelle beinhaltet, und Extrahieren aus der Punktwolke der Punkte, die zu dem Suchvolumen gehören;
   c) unter Berücksichtigung der Punkte der Punktwolke innerhalb des Suchvolumens, Bestimmen der Normalen zu der durch die Punkte definierten Oberflächen;
   d) Bestimmen, für jede dieser Normalen, ihrer Ausrichtung; und
   e) Analysieren der Ausrichtung der Normalen in dem Suchvolumen, um die Fehlstelle bei Vorhandensein einer anomalen Abweichung der Ausrichtung der Normalen zu identifizieren,

   wobei der Schritt des Analysierens der Ausrichtung der Normalen für die Punkte der Punktwolke im Inneren des Suchvolumens Folgendes umfasst: Berechnen der Winkel zwischen den Normalen und Bestimmen, dass zwei Normale ähnlich sind, wenn der Winkel zwischen ihnen geringer als ein vordefinierter Schwellenwert ist, Identifizieren von mindestens zwei Gruppen homogener Punkte, die sich einander ähnelnden Normalen zugehörig sind, und Bestimmen des Vorhandenseins der anomalen Abweichung an Zwischenpunkten zwischen den mindestens zwei Gruppen homogener Punkte.

2. Verfahren nach Anspruch 1, das Verfahren umfassend Filtern der Punkte der 3D-Punktwolke auf der Basis des Euklidischen Abstands zwischen ihnen, wobei das Filtern Folgendes umfasst: Berechnen, für jeden Punkt, eines Durchschnittsabstands in Bezug auf eine Anzahl, N, von benachbarten Punkten und Entfernen, aus der 3D-Punktwolke, der Punkte, die einen Durchschnittsabstand von ihren N benachbarten Punkten aufweisen, der größer als der Wert eines Filterschwellenwerts ist.

3. Verfahren nach Anspruch 2, wobei das Filtern ferner das Berechnen einer Standardabweichung der für jeden Punkt der 3D-Punktwolke berechneten Durchschnittsabstände und das Definieren, für jeden Punkt der 3D-Punktwolke, des Wertes des Filterschwellenwerts, f_th, auf die folgende Weise umfasst:

$$f\_th = m + stdv * sX,$$

wobei m der Durchschnittsabstand ist, stdv die Standardabweichung ist und sX ein vordefinierter Faktor ist.

4. Verfahren nach einem der vorhergehenden Ansprüche, das Verfahren umfassend Lokalisieren eines oder mehrerer bekannter Referenzobjekte oder -ränder in der 3D-Punktwolke und Neupositionieren des Suchvolumens auf Basis der Lokalisierung eines oder mehrerer bekannter Referenzobjekte oder -ränder.

5. Verfahren nach einem der vorhergehenden Ansprüche, wobei der Schritt des Bestimmens der Normalen zu den durch die Punkte definierten Oberflächen das Durchführen einer mathematischen Triangulation der in dem Suchvolumen beinhalteten Punkte umfasst, um einen Satz von Dreiecken zu bestimmen, sodass die Vereinigung der Oberflächen der Dreiecke die Oberfläche des in dem Suchvolumen beinhalteten Objekts darstellt.

6. Verfahren nach Anspruch 5, wobei der Schritt des Bestimmens der Normalen das Berechnen der Normalen in Bezug auf die Oberflächen der Dreiecke umfasst und der Schritt des Analysierens der Ausrichtung der Normalen das Berechnen einer Ausrichtung eines Versors der Normalen von jedem Dreieck in Bezug auf einen Referenzversor als die Komponente des Versors der Normalen in eine durch den Referenzversor definierte Richtung umfasst.

7. Verfahren nach Anspruch 6, wobei das Berechnen einer Ausrichtung eines Versors der Normalen jedes Dreiecks das Berechnen des Cosinus des Winkels, T, zwischen dem Versor der Normalen und dem Referenzversor umfasst.

8. Verfahren nach Anspruch 6 oder 7, wobei der Schritt des Analysierens der Ausrichtung der Normalen Folgendes umfasst: Prüfen, dass alle die Normalen die Komponente mit demselben Vorzeichen aufweisen, und wenn eine der Normalen die Komponente mit einem entgegengesetzten Vorzeichen aufweist, Umkehren des Vorzeichens der Komponente mit einem entgegengesetzten Vorzeichen.

9. Verfahren nach einem der vorhergehenden Ansprüche, wobei der Schritt des Analysierens der Ausrichtung der Normalen das Auswählen von Gruppen homogener Punkte umfasst, die eine Anzahl von Punkten zwischen einer vordefinierten minimalen Anzahl und einer vordefinierten maximalen Anzahl umfassen.

10. Verfahren nach Anspruch 9, wobei der Schritt des Analysierens der Ausrichtung der Normalen das Erstellen einer Tiefenkarte ausgehend von den ausgewählten Gruppen homogener Punkte und das Identifizieren der Fehlstelle auf der Tiefenkarte an einem Loch der Karte umfasst.

11. System zum Identifizieren einer Fehlstelle auf einer Oberfläche eines innerhalb einer Arbeitsumgebung platzierten Objekts, das System beinhaltend:

- eine Erfassungseinheit (11), die dazu konfiguriert ist, die Arbeitsumgebung zu digitalisieren, um eine 3D-Punktwolke zu erhalten; und
- eine Verarbeitungseinheit (12), die dazu konfiguriert ist:

- aus der Punktwolke die Punkte zu extrahieren, die zu einem Suchvolumen gehören, das die Fehlstelle umfasst;
- unter Berücksichtigung der Punkte der Punktwolke innerhalb des Suchvolumens, die Normalen zu den durch die Punkte definierten Oberflächen zu bestimmen;
- für jede dieser Normalen ihre Ausrichtung zu bestimmen; und
- die Ausrichtung der Normalen in dem Suchvolumen zu analysieren, um die Fehlstelle bei Vorhandensein einer anomalen Abweichung der Ausrichtung der Normalen zu identifizieren,

wobei die Verarbeitungseinheit (12) ferner dazu konfiguriert ist, für die Punkte der Punktwolke im Inneren des Suchvolumens die Winkel zwischen den Normalen zu berechnen und zu bestimmen, dass zwei Normale ähnlich sind, wenn der Winkel zwischen ihnen geringer als ein vordefinierter Schwellenwert ist, mindestens zwei Gruppen homogener Punkte zu identifizieren, die sich einander ähnelnden Normalen zugehörig sind, und das Vorhandensein der anomalen Abweichung an Zwischenpunkten zwischen den mindestens zwei Gruppen homogener Punkte zu bestimmen.

12. System nach Anspruch 11, wobei die Erfassungseinheit (11) einen Digitalisierungssensor umfasst, der ein künstliches Sichtsystem implementiert und ein Stereoskopsystem umfasst, das zwei Kameras und einen LED-Projektor verwendet.

13. System nach Anspruch 11 oder 12, wobei das System ferner eine Betätigungseinheit (13) zum Senden von Befehlen an einen Roboter (3) umfasst, um eine Arbeit an dem Objekt an der identifizierten Fehlstelle auszuführen.

**Revendications**

1. Procédé mis en œuvre par ordinateur d'identification d'une discontinuité sur une surface d'un objet placé au sein d'un environnement de travail, ledit procédé incluant :

a) la numérisation dudit environnement de travail pour obtenir un nuage de points 3D ;

b) la détermination, au sein dudit environnement de travail, d'un volume de recherche incluant ladite discontinuité et l'extraction à partir dudit nuage de points des points appartenant audit volume de recherche ;

c) en considérant les points dudit nuage de points au sein dudit volume de recherche, la détermination des normales aux surfaces définies par lesdits points ;

d) la détermination, pour chacune de ces normales, de son orientation ; et

e) l'analyse de l'orientation desdites normales dans ledit volume de recherche pour identifier ladite discontinuité en présence d'une variation anormale dans l'orientation des normales,

ladite étape d'analyse de l'orientation desdites normales comprend, pour les points dudit nuage de points à l'intérieur dudit volume de recherche, le calcul des angles entre les normales et la détermination du fait que deux normales sont similaires si l'angle entre elles est inférieur à un seuil prédéfini, l'identification d'au moins deux groupes de points homogènes associés aux normales similaires entre elles et la détermination de la présence de ladite variation anormale au niveau de points intermédiaires entre lesdits au moins deux groupes de points homogènes.

2. Procédé selon la revendication 1, ledit procédé comprenant le filtrage des points dudit nuage de points 3D sur la base de la distance euclidienne entre eux, ledit filtrage comprenant le calcul, pour chaque point, d'une distance moyenne par rapport à un nombre, N, de points adjacents et le retrait dudit nuage de points 3D des points qui ont une distance moyenne par rapport à leurs N points adjacents supérieure à la valeur d'un seuil de filtrage.

3. Procédé selon la revendication 2, dans lequel ledit filtrage comprend en outre le calcul d'un écart type des distances moyennes calculées pour chaque point dudit nuage de points 3D et la définition, pour chaque point dudit nuage de points 3D, de la valeur dudit seuil de filtrage, f_th, de la manière suivante :

$$f\_th = m + stdv * sX,$$

où m est ladite distance moyenne, stdv est l'écart type et sX est un facteur prédéfini.

4. Procédé selon l'une quelconque des revendications précédentes, ledit procédé comprenant la localisation d'un ou plusieurs objets ou contours de référence connus dans le nuage de points 3D et le repositionnement dudit volume de recherche sur la base de ladite localisation d'un ou plusieurs objets ou contours de référence connus.

5. Procédé selon l'une quelconque des revendications précédentes, dans lequel ladite étape de détermination des normales aux surfaces définies par les points comprend la réalisation d'une triangulation mathématique des points inclus dans ledit volume de recherche pour déterminer un ensemble de triangles tel que l'union des surfaces desdits triangles représente la surface des objets inclus dans ledit volume de recherche.

6. Procédé selon la revendication 5, dans lequel ladite étape de détermination des normales comprend le calcul desdites normales par rapport aux surfaces desdits triangles et ladite étape d'analyse de l'orientation desdites normales comprend le calcul d'une orientation d'un vecteur unitaire de la normale de chaque triangle par rapport à un vecteur unitaire de référence comme composante du vecteur unitaire de la normale dans une direction définie par le vecteur unitaire de référence.

7. Procédé selon la revendication 6, dans lequel ledit calcul d'une orientation d'un vecteur unitaire de la normale de chaque triangle comprend le calcul du cosinus de l'angle, T, entre ledit vecteur unitaire de la normale et ledit vecteur unitaire de référence.

8. Procédé selon la revendication 6 ou 7, dans lequel ladite étape d'analyse de l'orientation desdites normales comprend la vérification que toutes les normales ont ladite composante du même signe et, si l'une desdites normales a ladite composante de signe opposé, l'inversion du signe de ladite composante de signe opposé.

9. Procédé selon l'une quelconque des revendications précédentes, dans lequel ladite étape d'analyse de l'orientation desdites normales comprend la sélection de groupes de points homogènes comprenant un nombre de points entre un nombre minimum prédéfini et un nombre maximum prédéfini.

10. Procédé selon la revendication 9, dans lequel ladite étape d'analyse de l'orientation desdites normales comprend la construction d'une carte de profondeur à partir des groupes de points homogènes sélectionnés et l'identification de ladite discontinuité sur ladite carte de profondeur au niveau d'un trou sur ladite carte.

11. Système d'identification d'une discontinuité sur une surface d'un objet placé au sein d'un environnement de travail, ledit système incluant :

   - une unité d'acquisition (11) configurée pour numériser ledit environnement de travail pour obtenir un nuage de points 3D ; et
   - une unité de traitement (12) configurée pour :

      - extraire dudit nuage de points les points appartenant à un volume de recherche comprenant ladite discontinuité ;
      - en considérant les points dudit nuage de points au sein dudit volume de recherche, déterminer les normales aux surfaces définies par lesdits points ;
      - déterminer, pour chacune desdites normales, son orientation ; et
      - analyser l'orientation desdites normales dans ledit volume de recherche pour identifier ladite discontinuité en présence d'une variation anormale dans l'orientation des normales,

   dans lequel l'unité de traitement (12) est en outre configurée, pour les points dudit nuage de points à l'intérieur dudit volume de recherche, pour calculer les angles entre les normales et déterminer que deux normales sont similaires si l'angle entre elles est inférieur à un seuil prédéfini, identifier au moins deux groupes de points homogènes associés aux normales similaires entre elles et déterminer la présence de ladite variation anormale au niveau de points intermédiaires entre lesdits au moins deux groupes de points homogènes.

12. Système selon la revendication 11, dans lequel ladite unité d'acquisition (11) comprend un capteur de numérisation qui met en œuvre un système de vision artificielle et comprend un système stéréoscopique qui utilise deux caméras et un projecteur à DEL.

13. Système selon la revendication 11 ou 12, ledit système comprenant en outre une unité d'actionnement (13) pour envoyer des commandes à un robot (3) pour qu'il effectue un travail sur ledit objet au niveau de la discontinuité identifiée.

Fig. 1

**Fig. 2**

- start
- 201 digitization of the work environment
- 202 filtering of the digital data
- 203 known references?
  - no
  - yes
- 204 localization of the known references
- 205 identificaton of the discontinuity
- end

start → calculation of the normals (301) → analysis of the orientation of the normals (302) → segmentation of the points (303) → calculation of the coordinates of the discontinuity (304) → end

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 111192225 B

- EP 1976671 A

### Non-patent literature cited in the description

- Point cloud 3D parent surface reconstruction and weld seam feature extraction for robotic grinding path planning. **WANG XIANGFEI et al.** The International Journal of Advanced Manufacturing Technology. Springer, 20 February 2020, vol. 107, 827-841